# EUROPÄISCHE PATENTSCHRIFT

(11) **EP 2 913 514 B1**
(45) Veröffentlichungstag und Bekanntmachung des Hinweises auf die Patenterteilung: **24.04.2024**
(21) Anmeldenummer: 15153475.7
(22) Anmeldetag: 02.02.2015
(51) Int. Cl.: F02N 7/00, B60R 16/08, E02F 9/20, E02F 9/22, F02N 7/08, B60K 6/12

(54) **MOBILE HYDRAULISCHE BAUMASCHINE**
MOBILE HYDRAULIC CONSTRUCTION MACHINE
MACHINE HYDRAULIQUE MOBILE

(30) Priorität: 03.02.2014 DE 102014001369
(43) Veröffentlichungstag der Anmeldung: 02.09.2015
(73) Patentinhaber: Liebherr-Hydraulikbagger GmbH, 88457 Kirchdorf/Iller (DE)
(72) Erfinder: Meier, Simon, 87700 Amendingen (DE); Meitinger, Bernhard, 87740 Buxheim (DE)
(74) Vertreter: Laufhütte, Dieter

(56) Entgegenhaltungen:
- EP-A1- 2 308 795
- WO-A1-2012/125798
- DE-A1- 19 852 039
- DE-B- 1 006 732
- JP-A- 2013 091 953
- US-A- 3 892 283

## Beschreibung

Die Erfindung betrifft eine mobile hydraulische Baumaschine, insbesondere einen Hydraulikbagger, mit einem Verbrennungsmotor und einer mittels des Verbrennungsmotors angetriebenen Hydraulik.

Gattungsgemäße Baumaschinen umfassen einen Verbrennungsmotor, der mit mindestens einer entsprechenden Pumpe der Hydraulik gekoppelt ist. Die mindestens eine Pumpe wird durch den Verbrennungsmotor im Pumpenbetrieb betrieben und stellt den notwendigen Hydraulikdruck in der Hydraulik zur Verfügung.

Beim Aufbau der Hydraulik unterscheidet man bei einer Baumaschine grundsätzlich zwischen der Arbeitshydraulik, deren Verbraucher für die Funktionen der Ausrüstung verantwortlich sind, und der übrigen Hydraulik mit den Nebenverbrauchern. Die Arbeitshydraulik wird durch die Hauptpumpe der Hydraulik - nachstehend Arbeitspumpe genannt - betrieben und umfasst alle hydraulischen Komponenten für die Durchführung der Baufunktionen, das heißt den Betrieb der Ausrüstung und der Anbaugeräte.

Die Hydraulik der Nebenverbraucher (Nebenverbraucherkreis) wird für gewöhnlich von mehreren Hydraulikpumpen - nachstehend Nebenverbraucherpumpe genannt - betrieben und stellt sonstige zum Betrieb der Baumaschine notwendigen Funktionen bereit, wie beispielsweise eine hydraulische Motorlüftung, eine hydraulische Lenkung und eine hydraulische Bremse, etc..

Angesichts der verschiedenen Funktionen der Nebenverbraucher, erfolgt deren Regelung entsprechend unterschiedlich, man unterscheidet hierbei grundsätzlich zwischen Druck- und Mengenregelung. Die Nebenverbraucher sind deshalb an unterschiedlich geregelte Nebenverbraucherpumpen angebunden, das bedeutet beispielsweise, dass eine druckgeregelte Nebenverbraucherpumpe eine druckgeregelte Motorlüftung und eine mengengeregelte Nebenverbraucherpumpe eine mengengeregelte hydraulische Lenkung betreiben. Für den Fall, dass ein druckgeregelter Nebenverbraucher vorübergehend keine hydraulische Energie benötigt bzw. beansprucht, läuft seine druckmittelbereitstellende Zahnradpumpe mit der Folge der energetischen Ineffizienz weiter. Eine Zusammenführung unterschiedlicher Pumpensysteme konnte bisher aufgrund verschiedener Regelungsprinzipien und der dadurch resultierenden hohen Schwingungsanfälligkeit bzw. Konstruktionskomplexität nicht erfolgen.

Die EP 2 308 795 A1 zeigt eine hydraulische Vorrichtung für eine mobile Arbeitsmaschine, die sämtliche Merkmale des Oberbegriffs des Anspruchs 1 aufweist.

Die JP 2013 091953 A zeigt einen Motorstarthilfemechanismus eines hydraulischen Pumpenmotors einer Arbeitsmaschine.

Die WO 2012/125798 A1 betrifft ein Startsteuerungssystem für ein Hydrauliksystem, das Über einen Verbrennungsmotor angetrieben ist.

Die US 3 892 283 A offenbart hydraulische Fahrzeugantriebe.

Die Aufgabe der vorliegenden Erfindung besteht daher darin, einen energieeffizienteren Betrieb der Baumaschine unter Berücksichtigung der oben genannten Problemstellungen zu ermöglichen, indem die Nebenverbraucher möglichst energieeffizient an ein zusammengeführtes Nebenverbraucherpumpensystem angebunden werden.

Gelöst wird diese Aufgabe durch eine mobile hydraulische Baumaschine gemäß den Merkmalen des Anspruchs 1. Demnach umfasst die mobile hydraulische Baumaschine, insbesondere in Form eines Hydraulikbaggers, einen Verbrennungsmotor und eine mittels des Verbrennungsmotors angetriebene Hydraulik, insbesondere eine Hydraulik für die Nebenverbraucher der Baumaschine (Nebenverbraucherkreis). Vorzugsweise bezieht sich die Hydraulik nicht auf die Arbeitshydraulik einer Baumaschine, sondern auf den Hydraulikkreis zur Versorgung der Nebenverbraucher einer Baumaschine, beispielsweise einer hydraulischen Bremse, einer hydraulischen Lenkung, wenigstens eines hydraulischen Lüftermotors oder einer entsprechenden Vorsteuerung.

Erfindungsgemäß ist die Anbindung mindestens eines mit hydraulischem Druck beaufschlagbaren Druckspeichers vorgesehen, der mit einer verstellbaren Nebenv erbraucherpumpe befüllt werden und dadurch die notwendige Energieversorgung der Nebenverbraucher bewerkstelligen kann. Infolgedessen können insbesondere die druckgeregelten Nebenverbraucher energieoptimiert angebunden werden, da hierdurch mindestens eine bisher erforderliche, jedoch ineffizient angeordnete und druckgeregelte Nebenverbraucherpumpe, vor allem eine Zahnradpumpe, für die Versorgung dieser druckgeregelten Nebenverbraucher wegfallen könnte. In Summe ergibt sich eine energieoptimierte Nebenverbraucheranbindung mit nur einer verstellbaren Nebenverbraucherpumpe.

Nach der Erfindung umfasst die Hydraulik wenigstens ein Prioritätsventil, um die einzelnen eingebundenen Nebenverbraucher der Baumaschine normgerecht priorisieren zu können. Die Hydraulik kann folglich in einen Primär- und Sekundärverbraucherkreis der Nebenverbraucher unterteilt werden. Mittels des Prioritätsventils sind wenigstens ein Primärverbraucher, der wenigstens eine hydraulische Druckspeicher bzw. die ein oder mehreren weiteren Nebenverbraucher mit der wenigstens einen verstellbaren Arbeitspumpe der Hydraulik verbunden. Das Prioritätsventil stellt sicher, dass der wenigstens eine angeschlossene Primärverbraucher mit der angeforderten hydraulischen Energie versorgbar ist, also mit höherer Priorität betrieben wird. Nur für den Fall, dass überschüssige Hydraulikenergie vorhanden ist, wird der wenigstens eine hydraulische Druckspeicher durch die verstellbare Nebenverbraucherpumpe aufgeladen bzw. ein oder mehrere weitere Nebenverbraucher durch die verstellbare Arbeitspumpe gespeist.

Als ein Primärverbraucher wird seitens der hierfür zuständigen Normen beispielsweise die hydraulisch betätigbare Lenkung des mobilen Hydraulikbaggers bzw. der Baumaschine angegeben, die gegenüber den anderen Nebenverbrauchern stets zu priorisieren ist. Als Nebenverbraucher des Sekundärkreises seien beispielsweise wenigstens eine hydraulische Bremse und/oder wenigstens eine hydraulische Motorlüftung bzw. wenigstens eine entsprechende Vorsteuerung genannt.

Als besonders vorteilhaft erweist sich ein Load-Sensing-Betrieb der verstellbaren Nebenverbraucherpumpe. Unter dem Load-Sensing-Betrieb wird eine hydraulische Steuerung verstanden, bei der Druck und/oder Volumenstrom der verstellbaren Nebenverbraucherpumpe an die von den Verbrauchern geforderten Bedingungen angepasst werden. Beispielsweise kann der Load-Sensing-Betrieb eine Anpassung der verstellbaren Nebenverbraucherpumpe an die von dem wenigstens einen Primärverbraucher und/oder den wenigstens einen Sekundärverbraucher bzw. dem hydraulischem Druckspeicher geforderten Bedingungen vorsehen. Als zweckmäßig erweist sich ein sogenannter Closed-Center-System-Betrieb der verstellbaren Nebenverbraucherpumpe. Denkbar ist es, dass die Load-Sensing-Leitung des Sekundärverbraucherkreises eine Messblende aufweist, mit der sich der rückgeführte Load-Sensing-Druck justieren lässt.

In einer weiteren vorteilhaften Ausgestaltung der Erfindung umfasst die Hydraulik wenigstens einen Hydromotor, der aus dem besagten hydraulischen Druckspeicher zum Anlassen des Verbrennungsmotors speisbar ist. Der ohnehin bereits vorgesehene hydraulische Druckspeicher hat somit neben der erfindungsgemäßen Versorgung der Nebenverbraucher zusätzlich die Aufgabe, einem Hydromotor zum Anlassen eines Verbrennungsmotors hydraulische Energie bereitzustellen. Dadurch lässt sich erfindungsgemäß eine hydraulisch kombinierte Anordnung realisieren, die zusätzlich eine energetisch effiziente Umsetzung einer Start-Stopp-Automatik des Verbrennungsmotors ermöglicht.

Als Hydromotor kann vorteilhafterweise die ohnehin bereits vorgesehene und mit dem Verbrennungsmotor gekoppelte verstellbare Nebenverbraucherpumpe bzw. optional die verstellbare Arbeitspumpe der Arbeitshydraulik verwendet werden. Diese weist vorzugsweise externe Steuerleitungen auf, über die der jeweilige Schwenkwinkel, das heißt ein negativer bzw. positiver Schwenkwinkel, stufenweise oder kontinuierlich einstellbar ist.

Die verstellbare Nebenverbraucherpumpe kann beispielsweise bei positivem Schwenkwinkel im regulären Pumpenbetrieb arbeiten, und die notwendige Fördermenge zum Betrieb der ein oder mehreren angeschlossenen Hydraulikverbraucher liefern. Daneben besteht die Möglichkeit, die verstellbare Nebenverbraucherpumpe mit negativem Schwenkwinkel zu betreiben, sodass diese als Hydromotor agiert und als Anlasser für den Verbrennungsmotor dient. Der dafür benötigte Hydraulikdruck wird aus dem hydraulischen Druckspeicher bereitgestellt. Alternativ kann die verstellbare Nebenverbraucherpumpe auch wahlweise über die Saugseite speisbar sein, insbesondere aus dem hydraulischen Druckspeicher, und in diesem Betriebsmodus als Hydromotor zum Anlassen des Verbrennungsmotors arbeiten.

Die bisher zum Einsatz kommenden elektrischen Anlasser sind für eine hohe Zahl an Startzyklen nicht ausgelegt, weshalb bisher auf die Implementierung einer Start-Stopp-Automatik während des regulären Arbeitsbetriebes der Baumaschine verzichtet wurde. Durch den hydraulischen Druckspeicher bzw. den Hydromotor wird nun eine energieeffiziente und verschleißfeste Alternative zum bisherigen elektrischen Starter aufgezeigt, mit dem sich eine Start-Stopp-Automatik der Baumaschine verwirklichen lässt. Der Verbrennungsmotor kann nun während Phasen ohne Energieanforderung der hydraulischen Verbraucher ausgeschaltet werden und über den hydraulischen Anlasser im Bedarfsfall wiedergestartet werden. Dadurch wird ein energieeffizienterer Betrieb der Baumaschine aufgrund der damit verbundenen Treibstoffeinsparung erreicht.

Die Aktivierung der Start-Stopp-Automatik kann an bestimmte Aktionen des Maschinenführers gekoppelt sein, beispielsweise ein Wechsel zwischen Neutral- und Arbeitsstellung der ein oder mehreren Bedienhebel. Natürlich kann die Start-Stopp-Automatik grundsätzlich deaktivierbar sein.

Bei einem Kaltstart des Verbrennungsmotors bzw. der verstellbaren Nebenverbraucherpumpe ist es wünschenswert, die Belastung des Verbrennungsmotors bzw. der verstellbaren Nebenverbraucherpumpe zumindest kurzeitig zu reduzieren. Unter Umständen kann es vorkommen, dass der elektrische Anlasser für den Kaltstart nicht ordnungsgemäß funktioniert, wenn die verstellbaren Nebenverbraucherpumpe bzw. der Verbrennungsmotor unter Volllast angelassen werden soll. Für diesen Fall kann es zweckmäßig sein, dass vor einem Kaltstart die Anforderungen der angeschlossenen Verbraucher auf ein Minimum reduziert werden. Dies wird dadurch realisiert, dass das rückgeführte Load-Sensing-Signal des Primärverbraucherkreises und/oder des Nebenverbraucherkreises unterdrückt wird, beispielsweise durch Integration eines Schaltventils in die zur verstellbaren Nebenverbraucherpumpe rückgeführte LS-Leitung. Durch Schalten des Ventils kann die Rückführung des Load-Sensing-Druckes verändert oder unterbrochen werden.

Das Schaltventil kann insbesondere derart schaltbar sein, sodass dieses die Druckrückführung während eines Kaltstartes unterbricht und nach einem erfolgreichen Neustart des Verbrennungsmotors die entsprechenden Druckleitungen sofort wieder öffnet, sodass sich ein Load-Sensing-Betrieb der verstellbaren Nebenverbraucherpumpe einstellt.

Weiter ist nach der Erfindung der wenigstens eine hydraulische Druckspeicher über ein Startventil mit der verstellbaren Nebenverbraucherpumpe verbunden. Mithilfe des Startventils kann eine direkte Druckversorgung der verstellbaren Nebenverbraucherpumpe aus dem hydraulische Druckspeicher erreicht werden, es wird folglich ein Bypass zum Prioritätsventil ermöglicht. Während dem laufenden Betrieb des Verbrennungsmotors ist das Startventil nicht geschaltet und die Direktverbindung zwischen hydraulische Druckspeicher und der verstellbaren Nebenverbraucherpumpe ist unterbrochen. Zum Fremdstarten des Verbrennungsmotors mithilfe der verstellbaren Arbeitspumpe wird das Startventil geöffnet und ein direkter Volumenstrom vom hydraulischen Druckspeicher zur Nebenverbraucherpumpe geschaltet.

Bei Verwendung einer verstellbaren Nebenverbraucherpumpe, die für den Startvorgang aus dem hydraulische Druckspeicher über die Ansaugseite speisbar ist, kann mittels des Startventils auch eine Boostfunktion realisiert werden. Das Startventil verbindet den hydraulischen Druckspeicher mit der Ansaugseite der verstellbaren Nebenverbraucherpumpe. Vorteilhafterweise ist wie bereits die Umsetzung der Anlassfunktion auch die Umsetzung der Boostfunktion äquivalent mit der verstellbaren Arbeitspumpe möglich, indem diese ebenfalls an den hydraulischen Druckspeicher angebunden wird.

Aus Sicherheitsgründen wird erfindungsgemäß wenigstens ein Rückschlagventil in der direkten Verbindung zwischen hydraulischen Druckspeicher und verstellbaren Arbeits- oder Nebenverbraucherpumpe angeordnet, um die Fluidverbindung auf die Flussrichtung vom hydraulischen Druckspeicher zur verstellbaren Arbeits- oder Nebenverbraucherpumpe zu beschränken. Damit kann auch im Falle einer Fehlfunktion des Startventils ein Prioritätsbetrieb der angeschlossenen Primärverbraucher sichergestellt werden.

In einer besonders bevorzugten Ausgestaltung der Erfindung ist wenigstens eine Steuerung vorgesehen, die den Speicherdruck des hydraulischen Druckspeichers überwacht und den Startvorgang des Verbrennungsmotors mittels des Hydromotors bzw. der verstellbaren Nebenverbraucherpumpe nur dann zulässt, wenn der Speicherdruck einen bestimmten Mindestdruck erreicht oder überschreitet. Die Steuerung übernimmt die Ansteuerung des Startventils in Abhängigkeit des Druckniveaus innerhalb des hydraulischen Druckspeichers. Gleichzeitig kann die Steuerung die elektrische Umstellung der verstellbaren Arbeitspumpe zwischen einem positiven oder negativen Schwenkwinkel übernehmen. Zudem sorgt die Steuerung für die Ansteuerung der ein oder mehreren Schaltventile innerhalb der Load-Sensing-Leitungen zur verstellbaren Nebenverbraucherpum pe.

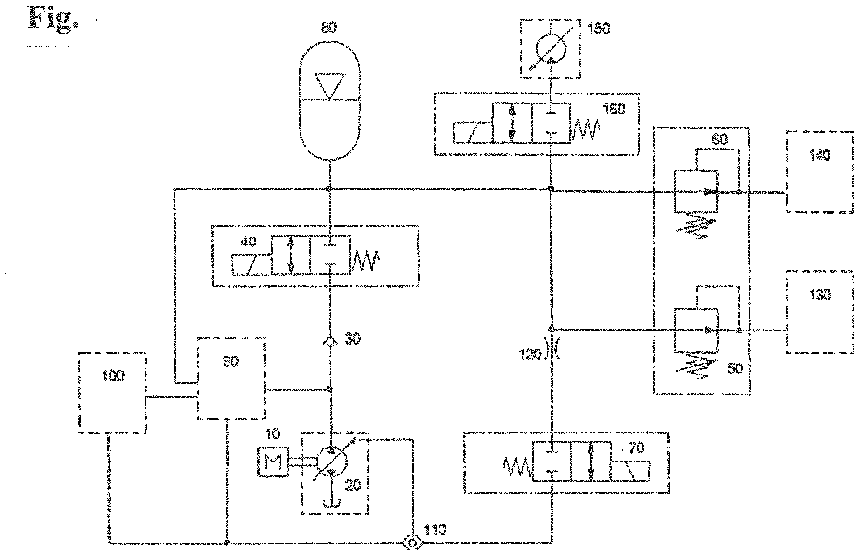

Weitere Vorteile und Eigenschaften der Erfindung werden im Folgenden anhand eines in der Zeichnung dargestellten Ausführungsbeispiels näher erläutert.

Die einzige Figur zeigt einen Hydraulikschaltplan des erfindungsgemäßen Hydraulikbaggers. Der Hydraulikschaltplan zeigt die Einbindung der Nebenverbraucher einer Baumaschine in die Hydraulik (Nebenverbraucherkreis). Die separate Arbeitshydraulik zur Bereitstellung der Funktionen der Ausrüstungen für den Baubetrieb der Maschine, d.h. die Baggerarbeiten, ist nicht dargestellt.

Die Energieversorgung der Hydraulik für die Nebenverbraucher wird über den Verbrennungsmotor 10 bereitgestellt, der mit der verstellbaren Nebenverbraucherpumpe 20 gekoppelt ist. Der Motor 10 treibt die verstellbare Nebenverbraucherpumpe im regulären Betrieb der Baumaschine an, sodass die verstellbare Nebenverbraucherpumpe 20 Hydrauliköl aus dem Tank fördert und den notwendigen Arbeitsdruck für die angeschlossenen Nebenverbraucher der Hydraulik bereitstellt. Die angeschlossenen Nebenverbraucher unterteilen sich in ein oder mehrere sogenannte Primärverbraucher, beispielweise in Form einer hydraulisch betätigbaren Lenkung 100, sowie ein oder mehrere Sekundärverbraucher, die gegenüber dem oder den Primärverbrauchern mit niedrigerer Priorität betrieben werden sollen.

Mögliche Sekundärverbraucher sind die Bremse 130, die Vorsteuerung 140 sowie der Motorlüfter 150, die gemeinsam mit dem hydraulischen Druckspeicher 80 den Sekundärverbraucherkreis bilden. Die Priorisierung und Aufteilung in einen Primär- und Sekundärverbraucherkreis wird über das Prioritätsventil 90 erreicht, das unmittelbar mit dem Pumpenausgang der verstellbaren Nebenverbraucherpumpe 20 verschaltet ist.

Durch das Prioritätsventil 90 kann sichergestellt werden, dass die Lenkung 100 primär mit der notwendigen hydraulischen Energie versorgt wird und nur bei einem Überschuss hydraulischer Energie eine Versorgung des Sekundärverbraucherkreises erfolgt, beispielsweise dann, wenn die Lenkung 100 nicht betätigt wird. In diesem Fall wird der hydraulische Druckspeicher 80 aufgeladen.

Bremse 130 und Vorsteuerung 140 werden über die Druckabschaltventile 50, 60 aus dem Konstantdrucksystem des hydraulischen Druckspeichers 80 versorgt. Der Motorlüfter 150 wird ebenfalls aus dem Konstantdrucksystem des hydraulischen Druckspeichers 80 versorgt, wobei die Lüfterdrehzahl über den Schwenkmotor des Motorlüfters 150 geregelt wird. Zur Verhinderung eines Leerlaufbetriebs wird der Motorlüfter 150 bei Nichtgebrauch über das Schaltventil 160 vom System getrennt.

Die verstellbare Nebenverbraucherpumpe 20 wird im sogenannten Load-Sensing-Betrieb gefahren. Das dafür notwendige Load-Sensing-Signal des Systems wird zum einen von dem Primärkreis ausgehend von der Lenkung 100 sowie von dem Sekundärverbraucherkreis an die verstellbare Nebenverbraucherpumpe zurückgeführt. Im Sekundärverbraucherkreis kann das Load-Sensing-Signal über die Messblende 120 generiert werden. Der Eingang des LS-Signals an der verstellbaren Nebenverbraucherpumpe 20 ist zudem mit dem Wechselventil 110 gesichert.

Um während eines Kaltstarts des Verbrennungsmotors 10 die Anforderungen der angeschlossenen Verbraucher auf ein Minimum zu reduzieren, kann über das Kaltstartventil 70 das Load-Sensing-Signal unterdrückt werden, indem das Kaltstartventil 70 in die in der Figur dargestellte Schaltstellung geschalten wird. In diesem Fall ist der Fluidstrom von der Messblende 120 zur verstellbaren Nebenverbraucherpumpe 20 unterbrochen.

Der Verbrennungsmotor 10 kann beispielsweise abgeschaltet werden, wenn während des Arbeitsbetriebes keine Antriebsenergie benötigt wird. Dies kann beispielsweise durch eine entsprechende Steuerung erfolgen, die die Bedienerkommandos auswertet und bei Ausbleiben entsprechender Kommandos den Verbrennungsmotor 10 abschaltet. Das Starten für die Implementierung der Start-Stopp-Automatik der Baumaschine erfolgt über die verstellbaren Nebenverbraucherpumpe 20, die bei negativem Schwenkwinkel als Hydromotor arbeitet und die dazu notwendige Energie aus dem hydraulischen Druckspeicher 80 bezieht. Über die Kopplung mit dem Verbrennungsmotor 10 wird dieser angetrieben und fremdgestartet.

Die Energieversorgung aus dem hydraulischen Druckspeicher 80 erfolgt dabei nicht über das Prioritätsventil 90, sondern über eine Bypass-Schaltung, die durch das Startventil 40 realisiert wird. Während des regulären Arbeitsbetriebes bei laufendem Verbrennungsmotor befindet sich das Startventil in der dargestellten Schaltstellung, in der die Direktverbindung zwischen verstellbaren Nebenverbraucherpumpe 20 und hydraulischen Druckspeicher 80 unterbrochen ist. Zum hydraulischen Anlassen des Verbrennungsmotors 10 wird das Ventil 40 geschaltet, der direkte Fluidstrom aus dem hydraulischen Druckspeicher 80 treibt die als Hydromotor agierende verstellbare Nebenverbraucherpumpe 20 an und über die mechanische Kopplung wird der Verbrennungsmotor 10 gestartet.

Das Umschalten auf negativen Schwenkwinkel der verstellbaren Nebenverbraucherpumpe ist nur dann möglich, wenn der Speicherdruck im hydraulischen Druckspeicher 80 ein gewisses Druckniveau übersteigt. Die Pumpe 20 wird mittels externen Steuersignals auf einen positiven oder negativen Schwenkwinkel gestellt. Die dafür notwendigen Steuerleitungen sind in der Zeichnung nicht dargestellt.

Das Rückschlagventil 30 ist als Sicherheit angedacht, so dass beim Hängenbleiben des Startventils 40 die Lenkung immer noch mit der gewünschten Priorität über das Ventil 90 versorgbar ist.

## Patentansprüche

1. Mobile hydraulische Baumaschine, insbesondere Hydraulikbagger, mit einem Verbrennungsmotor und einer mittels des Verbrennungsmotors angetriebenen Hydraulik, wobei die Hydraulik wenigstens einen hydraulischen Druckspeicher umfasst, aus dem wenigstens ein Hydromotor zum Starten des Verbrennungsmotors speisbar ist, und wobei wenigstens ein Nebenverbraucher der Hydraulik aus dem hydraulischen Druckspeicher speisbar ist,wobei der hydraulische Druckspeicher über ein schaltbares Startventil direkt mit dem Hydromotor bzw. der Verstellpumpe verschaltbar ist
**dadurch gekennzeichnet, dass**
dem Startventil wenigstens ein Rückschlagventil nachgeschaltet ist, um bei einer Fehlfunktion des Startventils den Prioritätsbetrieb des oder der Primärverbraucher sicherzustellen, und
die Hydraulik ein Prioritätsventil umfasst, so dass wenigstens ein Primärverbrauch mit hoher Priorität und der hydraulische Druckspeicher bzw. ein oder mehrere Sekundärverbraucher mit geringerer Priorität durch die Hydraulikpumpe speisbar sind.

2. Mobile hydraulische Baumaschine nach Anspruch 1, **dadurch gekennzeichnet, dass** der Hydromotor eine mittels des Verbrennungsmotors getriebene Verstellpumpe mit negativ einstellbarem Schwenkwinkel ist.

3. Mobile hydraulische Baumaschine nach Anspruch 1, **dadurch gekennzeichnet, dass** der Hydromotor eine mittels des Verbrennungsmotors getriebene Hydraulikpumpe, insbesondere Verstellpumpe ist, die für den Betrieb als Hydromotor über die Ansaugung speisbar ist.

4. Mobile hydraulische Baumaschine nach einem der Ansprüche 2, oder 3, **dadurch gekennzeichnet, dass** die Verstellpumpe im Load-Sensing Betrieb arbeitet, wobei das LS-Signal durch den Primärverbraucherkreis und/oder den Sekundärverbraucherkreis erzeugt wird.

5. Mobile hydraulische Baumaschine nach Anspruch 4, **dadurch gekennzeichnet, dass** im Sekundärverbraucherkreis wenigstens eine Messblende zur Generierung des LS-Signals vorgesehen ist.

6. Mobile hydraulische Baumaschine nach Anspruch 4 oder 5, **dadurch gekennzeichnet, dass** das LS-Signal des Primär- und/oder Sekundärverbraucherkreises über wenigstens ein darin angeordnetes Schaltventil unterdrückbar ist, vorzugsweise für den Kaltstart des Verbrennungsmotors bzw. der Verstellpumpe.

7. Mobile hydraulische Baumaschine nach einem der vorhergehenden Ansprüche, dass der wenigstens eine Primärverbraucher die Lenkung der Baumaschine ist und ein oder mehrere Sekundärverbraucher wenigstens eine hydraulische Bremse und/oder wenigstens eine Vorsteuerung und/oder wenigstens ein hydraulischer Lüftermotor sind.

8. Mobile hydraulische Baumaschine nach einem der vorhergehenden Ansprüche, **dadurch gekennzeichnet, dass** eine Steuerung vorgesehen ist, die den Druck des hydraulischen Druckspeichers überwacht und den Startvorgang des Verbrennungsmotors mittels des Hydromotors bzw. der Verstellpumpe nur bei einem definierten minimalen Speicherdruck zulässt.

## Claims

1. Mobile hydraulic construction machine, in particular hydraulic excavator, comprising an internal combustion engine and a hydraulics system powered by means of the hydraulic motor, wherein the hydraulics system comprises at least one hydraulic pressure accumulator from which at least one hydromotor for start-up of the internal combustion motor can be supplied, and wherein at least one secondary consumer of the hydraulics system can be supplied from the hydraulic pressure accumulator, wherein the hydraulic pressure accumulator can be directly connected with the hydraulics motor or the adjustment pump via a switchable start valve,
**characterized in that**
at least one non-return valve is connected downstream the start valve in order to ensure the prioritized operation of the primary consumer(s), and
the hydraulics system comprises a priority valve so that at least a primary consumption of high priority and the hydraulic pressure accumulator or one or multiple secondary consumers of low priority can be supplied by means of the hydraulic pump.

2. Mobile hydraulic construction machine according to claim 1, **characterized in that** the hydraulic motor is an adjustment pump with a negatively-adjustable pivot angle driven by means of the internal combustion engine.

3. Mobile hydraulic construction machine according to claim 1, **characterized in that** the hydraulic motor is a hydraulic pump, in particular adjustment pump, driven by means of the internal combustion engine, which pump, when operated as a hydraulic motor, can be supplied via the suctioning.

4. Mobile hydraulic construction machine according to one of claims 2 or 3, **characterized in that** the adjustment pump operates in the load-sensing mode, wherein the LS signal is generated by the primary consumer circuit and/or by the secondary consumer circuit.

5. Mobile hydraulic construction machine according to claim 4, **characterized in that** at least one measuring orifice is provided in the secondary consumer circuit for generating the LS signal.

6. Mobile hydraulic construction machine according to claim 4 or 5, **characterized in that** the LS signal of the primary and/or secondary consumer circuit can be suppressed by means of at least one switch valve arranged therein, preferably for the cold-start of the internal combustion engine or of the adjustment pump.

7. Mobile hydraulic construction machine according to one of the preceding claims, **characterized in that** the at least one primary consumer is the steering system of the construction machine and one or more secondary consumers are at least a hydraulic brake and/or at least a pre-control and/or at least a hydraulic fan motor.

8. Mobile hydraulic construction machine according to one of the preceding claims, **characterized in that** a controller is provided, which monitors the pressure of the hydraulic pressure accumulator and permits the start-up operation of the internal combustion engine by means of the hydraulic motor or the adjustment pump only in case of a defined minimum accumulator pressure.

## Revendications

1. Machine de chantier hydraulique mobile, en particulier pelle hydraulique, comportant un moteur à combustion interne et un système hydraulique entraîné par le moteur à combustion interne, le système hydraulique comprenant au moins un accumulateur hydraulique, permettant d'alimenter au moins un moteur hydraulique destiné au démarrage du moteur à combustion interne, et dans lequel au moins un consommateur auxiliaire du système hydraulique peut être alimenté à partir de l'accumulateur hydraulique, l'accumulateur hydraulique pouvant être connecté directement au moteur hydraulique ou à la pompe à cylindrée variable par le biais d'une soupape de mise en marche commutable,
**caractérisée en ce que**
au moins un clapet antiretour est branché en aval de la soupape de mise en marche pour assurer le fonctionnement prioritaire du ou des consommateurs primaires en cas de défaut de fonctionnement de la soupape de mise en marche, et
le système hydraulique comprend une soupape de priorité, de telle sorte qu'au moins un consommateur primaire avec une priorité élevée et l'accumulateur hydraulique ou un ou plusieurs consommateurs secondaires avec une priorité plus faible peuvent être alimentés par la pompe hydraulique.

2. Machine de chantier hydraulique mobile selon la revendication 1, **caractérisée en ce que** le moteur hydraulique est une pompe à cylindrée variable à angle de pivotement réglable sur une valeur négative, entraînée au moyen du moteur à combustion interne.

3. Machine de chantier hydraulique mobile selon la revendication 1, **caractérisée en ce que** le moteur hydraulique est une pompe hydraulique, en particulier une pompe à cylindrée variable, entraînée au moyen du moteur à combustion interne, qui peut être alimentée par le biais de l'aspiration pour le fonctionnement comme moteur hydraulique.

4. Machine de chantier hydraulique mobile selon l'une des revendications 2 ou 3, **caractérisée en ce que** la pompe à cylindrée variable fonctionne en mode Load Sensing, le signal LS étant généré par le circuit de consommateurs primaires et/ou le circuit de consommateurs secondaires.

5. Machine de chantier hydraulique mobile selon la revendication 4, **caractérisée en ce qu'**au moins un diaphragme de mesure est prévu dans le circuit de consommateurs secondaires pour générer le signal LS.

6. Machine de chantier hydraulique mobile selon la revendication 4 ou 5, **caractérisée en ce que** le signal LS du circuit de consommateurs primaires et/ou secondaires peut être supprimé par le biais d'au moins une soupape de commande disposée dans celui-ci, de préférence pour le démarrage à froid du moteur à combustion interne ou de la pompe à cylindrée variable.

7. Machine de chantier hydraulique mobile selon l'une des revendications précédentes, en ce que l'au moins un consommateur primaire est le mécanisme de direction de la machine de chantier et un ou plusieurs consommateurs secondaires sont au moins un frein hydraulique et/ou au moins une commande pilote et/ou au moins un moteur de ventilateur hydraulique.

8. Machine de chantier hydraulique mobile selon l'une des revendications précédentes, **caractérisée en ce qu'**une commande est prévue, laquelle surveille la pression de l'accumulateur hydraulique et autorise le processus de mise en route du moteur à combustion interne au moyen du moteur hydraulique ou de la pompe à cylindrée variable uniquement à une pression d'accumulateur minimale définie.
